# EUROPÄISCHE PATENTSCHRIFT

(11) **EP 2 020 172 B1**
(45) Veröffentlichungstag und Bekanntmachung des Hinweises auf die Patenterteilung: **13.10.2010**
(21) Anmeldenummer: 08158253.8
(22) Anmeldetag: 13.06.2008
(51) Int. Cl.: A01D 41/14, A01B 73/04

(54) **Erntevorsatz mit seitlicher Abdeckung**
Harvesting attachment with side cover
Accessoire de récolte doté d'une protection latérale

(30) Priorität: 31.07.2007 DE 102007035745
(43) Veröffentlichungstag der Anmeldung: 04.02.2009
(73) Patentinhaber: Maschinenfabrik Kemper GmbH & Co. KG, 48973 Stadtlohn (DE)
(72) Erfinder: Rickert, Clemens, 49683, Ahaus (DE); Grobmeier, Jens, 48703, Stadtlohn (DE); Hüning, Martin, 48727, Billerbeck (DE); Schulze Hockenbeck, Leo, 48351, Everswinkel (DE); Weitenberg, Klemens, 46325, Borken (DE)
(74) Vertreter: Holst, Sönke

(56) Entgegenhaltungen:
- EP-A- 0 310 532
- EP-A- 1 142 467
- DE-A1-102004 059 052
- US-A- 5 279 100
- US-A1- 2005 144 921

## Beschreibung

Die Erfindung betrifft einen Erntevorsatz mit einem Trägerrahmen, der einen Mittelteil und wenigstens ein am Mittelteil angelenktes, durch einen Hydraulikzylinder zwischen einer horizontalen Arbeitsstellung und einer angehobenen Transportstellung bewegliches Seitenteil und am Mittelteil sowie am Seitenteil angebrachte Elemente zur Aufnahme und Förderung von Pflanzen umfasst.

### Stand der Technik

An selbstfahrenden Erntemaschinen finden Erntevorsätze zum Abernten und Einbringen von Erntegut Verwendung. Aufgrund von Leistungssteigerungen der Erntemaschinen in jüngerer Zeit werden immer breitere Erntevorsätze verwendet, die eine relativ große Masse aufweisen. Während Schneidwerke für Mähdrescher gewöhnlich in sich starr sind und zum Straßentransport vom Mähdrescher getrennt und auf einem Transportwagen abgelegt werden, werden Maispflücker für Mähdrescher und Maisgebisse für Feldhäcksler in der Regel klappbar ausgeführt. Es gibt jedoch auch klappbare Schneidwerke für Mähdrescher. Zum Straßentransport werden äußere Seitenteile der Erntevorsätze in eine Transportstellung verschwenkt, in der Regel nach oben oder innen. Die klappbaren Erntevorsätze bleiben beim Straßentransport an der Vorderseite der Erntemaschine befestigt.

Bei der Fahrt auf einer Straße ist es sinnvoll, die Seiten des Erntevorsatzes abzudecken, um die von den scharfkantigen Pflanzenförderelementen des Erntevorsatzes ausgehende Unfallgefahr zu vermindern. Derartige Abdeckungen werden üblicherweise von Hand durch den Fahrer der Erntemaschine angebracht, was recht zeitaufwändig ist, da der Fahrer seinen Arbeitsplatz verlassen muss.

Die DE 10 2004 059 052 A schlägt vor, einen zur Abstützung des Erntevorsatzes bei einer Straßenfahrt dienenden Wagen mit einer seitlichen Abdeckung für den Erntevorsatz auszustatten. Diese Lösung erfordert den zusätzlichen Wagen, der aber nicht bei allen Erntemaschinen und Erntevorsätzen vorhanden ist.

### Aufgabe der Erfindung

Die der Erfindung zu Grunde liegende Aufgabe wird darin gesehen, einen Erntevorsatz mit in eine Transportstellung verbringbaren Seitenteilen und einer unaufwändig anbringbaren seitlichen Abdeckung bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntevorsatz umfasst einen Trägerrahmen mit einem Mittelteil und wenigstens einem Seitenteil. Der Seitenteil ist um eine horizontal und sich in Vorwärtsrichtung erstreckende Achse am Mittelteil angelenkt und durch einen Hydraulikzylinder zwischen einer Arbeitsstellung, in der sich der Seitenteil horizontal und koaxial zum Mittelteil erstreckt und einer Transportstellung, in der er um die Achse nach oben verschwenkt ist, beweglich. In der Regel sind beidseits des Mittelteils zwei Seitenteile vorhanden, die durch zugeordnete Hydraulikzylinder um die erwähnten Achsen verschwenkbar sind. Am Seitenteil und am Mittelteil sind jeweils Elemente zur Aufnahme und Förderung von Pflanzen angebracht, bei denen es sich beispielsweise um Mäh- und Einzugseinrichtungen für Maismähvorsätze oder um Pflückeinrichtungen für Maispflücker handeln kann. Eine Abdeckung ist um eine sich vertikal erstreckende Achse schwenkbar (direkt oder indirekt) am Mittelteil angelenkt und steht mit dem Seitenteil in einer Weise in einer Antriebsverbindung, dass die Abdeckung sich bei einem sich in der Arbeitsstellung befindlichen Seitenteil entlang dessen Rückseite erstreckt, während sich die Abdeckung bei einem in der Transportstellung befindlichen Seitenteil vom Mittelteil nach vorn erstreckt und das Mittelteil und seine Elemente zur Aufnahme und Förderung von Pflanzen zur Seite hin abdeckt.

Auf diese Weise werden das Mittelteil und die daran angebrachten Elemente zur Aufnahme und Förderung von Pflanzen selbsttätig zur Seite hin abgedeckt, wenn das Seitenteil sich in seiner Transportstellung befindet. Befindet sich das Seitenteil in der Arbeitsstellung, erstreckt sich die Abdeckung rückwärtig des Seitenteils entlang dessen Rückseite und stört demnach nicht beim Erntebetrieb. Der Bediener muss seinen Arbeitsplatz nicht verlassen, um die Abdeckung anzubringen.

Die Antriebsverbindung zwischen dem Seitenteil und der Abdeckung kann durch einen zum Verschwenken nur der Abdeckung dienenden zweiten Hydraulikzylinder erfolgen, der hydraulisch mit dem Hydraulikzylinder gekoppelt ist, der das Seitenteil zwischen der Arbeitsstellung und der Transportstellung bewegt, entweder direkt oder über einen vom Hydraulikzylinder mechanisch betätigten Nehmerzylinder. Bei einer besonders einfachen Ausführungsform ist eine mechanische Verbindung zwischen der Abdeckung und dem Seitenteil vorgesehen, die eine starre Stange und wegen der unterschiedlichen Bewegungsrichtungen des Seitenteils und der Abdeckung zwei Kugelgelenke umfasst, die jeweils zwischen der Stange einerseits und dem Seitenteil bzw. der Abdeckung andererseits angebracht sind. Es wäre aber auch denkbar, die mechanische Verbindung durch ein flexibles Zugmittel, wie ein Seil oder eine Kette bereitzustellen und die Abdeckung durch Federkraft oder die Schwerkraft vorzuspannen, so dass sie bei entspanntem Zugmittel selbsttätig eine gewünschte Stellung annimmt.

### Ausführungsbeispiel

In den Zeichnungen ist ein nachfolgend näher beschriebenes Ausführungsbeispiel der Erfindung dargestellt. Es zeigt:
- Fig. 1: eine Erntemaschine mit einem daran angebrachten Erntevorsatz,
- Fig. 2: eine Draufsicht auf den Erntevorsatz bei in der Arbeitsstellung befindlichen Seitenteilen des Trägerrahmens, und
- Fig. 3: eine Draufsicht auf den Erntevorsatz bei in der Transportstellung befindlichen Seitenteilen des Trägerrahmens.

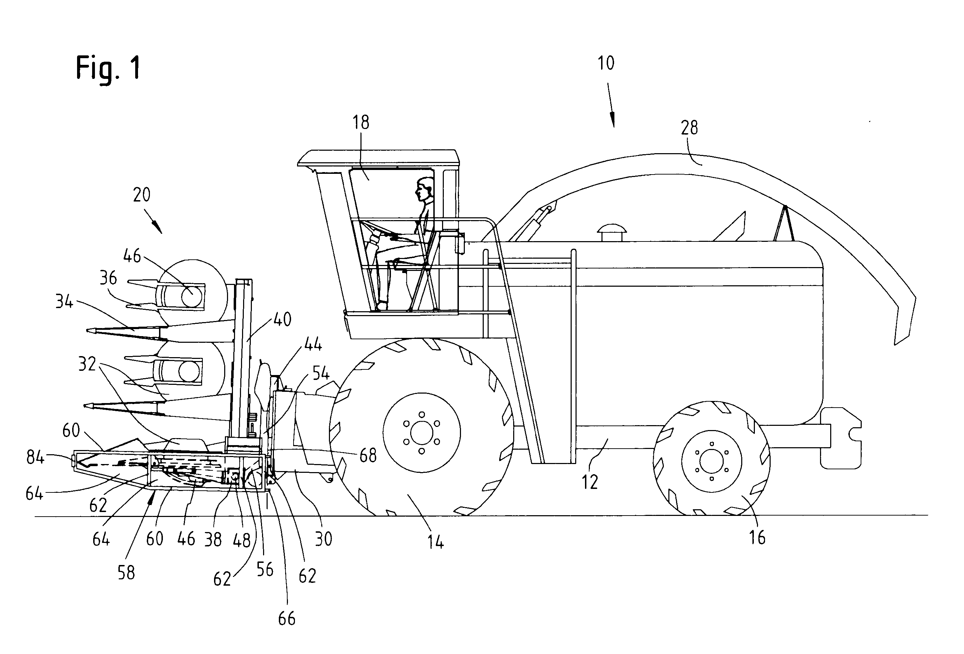

Eine in der Figur 1 gezeigte landwirtschaftliche Erntemaschine 10 in der Art eines selbstfahrenden Feldhäckslers baut sich auf einem Rahmen 12 auf, der von vorderen und rückwärtigen Rädern 14 und 16 getragen wird. Die vorderen Räder 14 dienen als Hauptantriebsräder, während die rückwärtigen Räder 16 lenkbar sind. Die Bedienung der Erntemaschine 10 erfolgt von einer Fahrerkabine 18 aus, von der aus ein Erntevorsatz 20 einsehbar ist. Mittels eines Erntevorsatzes 20 vom Boden aufgenommenes Gut, z. B. Mais, Sonnenblumen oder Sorghum, wird über ein Einzugsgehäuse 30 einer nicht eingezeichneten Häckseltrommel im Innern der Erntemaschine 10 zugeführt, die es in kleine Stücke häckselt und es einer (ebenfalls nicht eingezeichneten) Fördervorrichtung aufgibt. Das Gut verläßt die Erntemaschine 10 zu einem nebenher fahrenden Anhänger über einen schwenkbaren Austragschacht 28. Zwischen der Häckseltrommel und der Fördervorrichtung kann eine nicht eingezeichnete Nachzerkleinerungsvorrichtung angeordnet sein. Obwohl die Erfindung hier an einem Feldhäcksler dargestellt wird, kann sie auch an Mähdreschern mit zugehörigen Erntevorsätzen, wie Schneidwerken oder Maispflückern, Verwendung finden. Im Folgenden beziehen sich Richtungsangaben, wie vor, hinter, seitlich und oberhalb auf die Vorwärtsrichtung der Erntemaschine 10 und des Erntevorsatzes 20, die in der Figur 1 nach links verläuft.

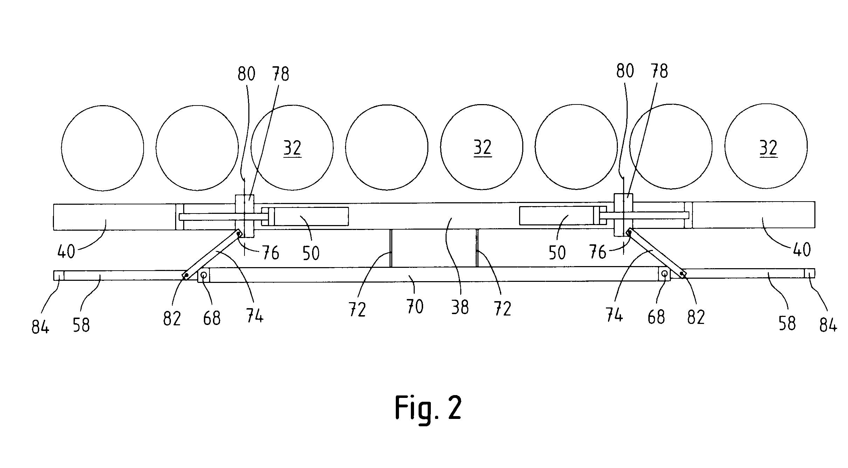

Zum Aufnehmen des Ernteguts dient der Erntevorsatz 20, der in Vorwärtsrichtung an der Frontseite der Erntemaschine 10 befestigt ist. Der Erntevorsatz 20 ist in der der dargestellten Ausführungsform ein an sich bekanntes Maisgebiss, das einen Trägerrahmen mit einem Mittelteil 38 und zwei (bezüglich der Vorwärtsrichtung der Erntemaschine 10) seitlich links und rechts neben dem Mittelteil 38 angeordneten Seitenteilen 40 umfasst. Die Seitenteile 40 sind durch Hydraulikzylinder 50 (s. Figur 2) nach oben in eine Transportstellung schwenkbar am Mittelteil 38 befestigt und können zum Ernteeinsatz hydraulisch heruntergeschwenkt werden, so dass sie in ihrer Arbeitsstellung beim Erntebetrieb parallel zum Mittelteil 38 verlaufen. Die Figur 1 zeigt die Seitenteile 40 in hochgeschwenktem Zustand. Am Mittelteil 38 sind in der vorliegenden Ausführungsform vier Elemente zur Aufnahme und Förderung von Pflanzen 32 in Form von Einzugs- und Mähtrommeln angebracht, während an beiden Seitenteilen 40 jeweils zwei Elemente zur Aufnahme und Förderung von Pflanzen 32 angebracht sind. Der Erntevorsatz 20 ist in an sich bekannter Weise mit Halmteilern 36, den Elementen zur Aufnahme und Förderung von Pflanzen 32, Teilerspitzen 34, Abdeckplatten und Fördermitteln ausgestattet, um das geerntete Gut der Häckseltrommel der Erntemaschine 10 zuzuführen. Der Erntevorsatz 20 zieht im Betrieb die Stängel des Mähguts in aufrechter Stellung ein, schneidet sie ab und führt sie dem Einzugsgehäuse 30 und anschließend der Häckseltrommel der Erntemaschine 10 zu.

Der Trägerrahmen des Erntevorsatzes 20 umfasst weiterhin einen oberen Querträger 44. Der Mittelteil 38 und die Seitenteile erstrecken sich unten an der Rückseite des Erntevorsatzes 20. An der Vorderseite des Mittelteils 38 sind Getriebegehäuse 46 angeschraubt, die zum Antrieb jeweils eines Elementes zur Aufnahme und Förderung von Pflanzen 32 dienen. Eine Antriebswelle 48 zum Antrieb der Elemente zur Aufnahme und Förderung von Pflanzen 32 über in den Getriebegehäusen 46 angeordnete Getriebe, die auch zum Antrieb der weiteren Fördermittel des Erntevorsatzes 20 dient und von einer Abtriebswelle der Erntemaschine 10 angetrieben wird, erstreckt sich in seitlicher Richtung innerhalb des hohlen Mittelteils 38.

Der obere Querträger 44 erstreckt sich in seitlicher Richtung oberhalb des Einlasses des Einzugsgehäuses 30 über dessen Breite. Er ist mit hakenförmigen Tragelementen verbunden, die von komplementären Tragelementen des Einzugsgehäuses 30 teilweise untergriffen werden und zur Befestigung des Erntevorsatzes 20 an der Erntemaschine 10 dienen. Er ist durch sich vertikal erstreckende Träger 54 und Verbindungsbleche 56 mit dem Mittelteil 38 verbunden. Der Trägerrahmen mit dem Mittelteil 38, den Seitenteilen 40, dem oberen Querträger 44 und den sich vertikal erstreckenden Trägern 54 und Verbindungsblechen 56 bildet somit ein Skelett des Erntevorsatzes 20, das alle weiteren Elemente des Erntevorsatzes 20 trägt. Zwischen dem oberen Querträger 44 und den sich vertikal erstreckenden Trägern 54 und Verbindungsblechen 56 (und somit dem Mittelteil 38 und den Seitenteilen 40 des Trägerrahmens) kann eine an sich bekannte Pendellagerung vorhanden sein, die eine Schwenkbewegung des Mittelteils 38 und der Seitenteile 40 um eine sich horizontal und in Vorwärtsrichtung erstreckende virtuelle Achse ermöglicht, die etwa in der Mitte des Einzugsgehäuses 30 liegt.

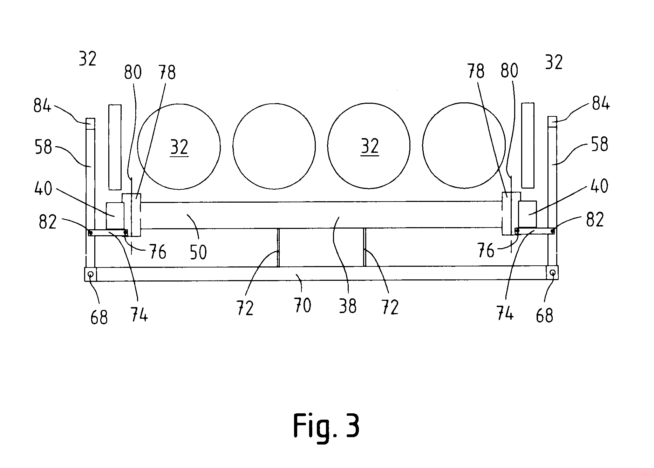

An beiden Außenseiten des Mittelteils 38 des Trägerrahmens 38 sind Abdeckungen 58 angebracht, die die Elemente zur Aufnahme und Förderung von Pflanzen 32 des Mittelteils 38 zur Seite hin abdecken und einen Unfallschutz bereitstellen. Die Abdeckung umfasst einen Rohrrahmen mit sich horizontal erstreckenden Rohren 60, vertikal verlaufenden Rohren 62 und zwischen den Rohren 60, 62 angeordneten Platten 64. Die Abdeckung 58 ist durch eine gabelförmige Lagerung 66 um eine vertikale Achse 68 schwenkbar an einem Träger 70 (s. Figuren 2 und 3) angelenkt, der sich an der Rückseite des Mittelteils 38 und unterhalb des Einzugskanals 30 quer über die Länge des Mittelteils 38 und seitlich darüber hinaus erstreckt und durch Streben 72 mit dem Mittelteil 38 verbunden ist. Der Träger 70 könnte alternativ mit dem oberen Querträger 44 bzw. einem damit verbundenen Element verbunden sein und demnach einer Pendelbewegung des Erntevorsatzes 20 um die oben erwähnte Pendellagerung nicht folgen.

Wie aus den Figuren 2 und 3 hervorgeht, sind die Abdeckungen 58 derart antriebsmäßig mit den Seitenteilen 40 gekoppelt, dass sich die Abdeckungen 58 bei in der Transportstellung (Figur 1 und 3) befindlichen Seitenteilen 40 sich vom Mittelteil 38 nach vorn erstrecken und die Elemente zur Aufnahme und Förderung von Pflanzen 32 des Mittelteils 38 zur Seite hin abdecken. Befinden sich die Seitenteile 40 hingegen in der Arbeitsstellung (Figur 2), erstrecken sich die Abdeckungen 38 rückwärtig der Seitenteile 40 vom Mittelteil 38 nach außen und stören nicht beim Ernteprozess. Die Antriebsverbindung zwischen den Seitenteilen 40 und der Abdeckung wird durch eine starre Stangen 74 realisiert, die an einem Ende jeweils durch Kugelgelenke 76 mit einer Halterung 78 verbunden sind, die das Seitenteil 40 um eine sich in Vorwärtsrichtung erstreckende Achse 80 schwenkbar am Mittelteil 38 lagert und sich mit dem Seitenteil 40 um die Achse 80 bewegt. Am anderen Ende sind die Stangen 74 durch Kugelgelenke 82 im Abstand von der Achse 68 mit der Abdeckung 58 gekoppelt. Die Kugelgelenke 76, 82 ermöglichen eine Kopplung zwischen der Abdeckung 58 und den Seitenteilen 40 trotz der unterschiedlichen Bewegungsrichtungen, die die Abdeckung 58 und die Seitenteile 40 beim Verschwenken letzterer zwischen Arbeits- und Transportstellung aufweisen.

An der Vorderseite der Abdeckung 58 ist eine Seitenbegrenzungsleuchte 84 mit integrierter Blinkleuchte angebracht, die über Kabel und eine Steckverbindung mit der Bordelektrik der Erntemaschine 10 verbunden ist. Ein Trennen und Wiederverbinden der Steckverbindung ist nicht erforderlich, wenn die Seitenteile in die Transportposition oder in die Arbeitsposition verschwenkt werden.

## Patentansprüche

1. Erntevorsatz (20) mit einem Trägerrahmen, der einen Mittelteil (38) und wenigstens ein am Mittelteil (38) angelenktes, durch einen Hydraulikzylinder (50) zwischen einer horizontalen Arbeitsstellung und einer angehobenen Transportstellung bewegliches Seitenteil (40) und am Mittelteil (38) sowie am Seitenteil (40) angebrachte Elemente (32) zur Aufnahme und Förderung von Pflanzen umfasst, **dadurch gekennzeichnet, dass** am Mittelteil (38) eine Abdeckung (58) um eine vertikale Achse (68) schwenkbar angelenkt ist und mit dem Seitenteil (40) derart in einer Antriebsverbindung steht, dass die Abdeckung (58) sich bei einem sich in der Arbeitsstellung befindlichen Seitenteil (40) entlang dessen Rückseite erstreckt und sich bei einem in der Transportstellung befindlichen Seitenteil (40) vom Mittelteil (38) nach vorn erstreckt und das Mittelteil (38) und seine Elemente (32) zur Aufnahme und Förderung von Pflanzen zur Seite hin abdeckt.

2. Erntevorsatz (20) nach Anspruch 1, **dadurch gekennzeichnet, dass** die Antriebsverbindung zwischen dem Seitenteil (40) und der Abdeckung (58) zwei Kugelgelenke (76, 82) und eine starre Stange (74) umfasst.

## Claims

1. Harvesting attachment (20) having a support frame which comprises a central part (38) and at least one side part (40), which is articulated on the central part (38) and can be moved by a hydraulic cylinder (50) between a horizontal working position and a raised transport position, and elements (32) mounted on the central part (38) and on the side part (40) for picking up and conveying plants, **characterized in that** a cover (58) is articulated on the central part (38), such that it can pivot about a vertical shaft (68), and is in drive connection with the side part (40) in such a way that the cover (58) extends along the rear side of a side part (40) when the latter is in the working position and extends forwards from the central part (38) when the side part (40) is in the transport position, and covers the central part (38) and the elements (32) thereof for picking up and conveying plants towards the side.

2. Harvesting attachment (20) according to Claim 1, **characterized in that** the drive connection between the side part (40) and the cover (58) comprises two ball joints (76, 82) and a rigid bar (74).

## Revendications

1. Tête de récolte (20) comprenant un cadre de support qui comprend une partie centrale (38) et au moins une partie latérale (40) articulée à la partie centrale (38), déplaçable au moyen d'un cylindre hydraulique (50) entre une position de travail horizontale et une position de transport relevée, et des éléments (32) montés sur la partie centrale (38) et sur la partie latérale (40) pour recevoir et transporter des plantes, **caractérisée en ce que** sur la partie centrale (38) est articulé un recouvrement (58) pouvant pivoter autour d'un axe vertical (68), qui est en liaison d'entraînement avec la partie latérale (40) de telle sorte que le recouvrement (58), lorsque la partie latérale (40) se trouve dans la position de travail, s'étende le long de son côté arrière, et lorsque la partie latérale (40) se trouve dans la position de transport, s'étende depuis la partie centrale (38) vers l'avant, et recouvre vers le côté la partie centrale (38) et ses éléments (32) pour recevoir et transporter des plantes.

2. Tête de récolte (20) selon la revendication 1, **caractérisée en ce que** la liaison d'entraînement entre la partie latérale (40) et le recouvrement (58) comprend deux articulations sphériques (76, 82) et une barre rigide (74).
